# EUROPÄISCHE PATENTANMELDUNG

(11) **EP 3 260 337 A1**
(43) Veröffentlichungstag der Anmeldung: **27.12.2017**
(21) Anmeldenummer: 16175893.3
(22) Anmeldetag: 23.06.2016
(51) Int. Cl.: B60T 13/24

(54) **PNEUMATISCHES BREMSSYSTEM**

(71) Anmelder: Kochsiek, Adolf, 33818 Leopoldshöhe (DE)
(72) Erfinder: Kochsiek, Adolf, 33818 Leopoldshöhe (DE)
(74) Vertreter: Rausch Wanischeck-Bergmann Brinkmann

(57) **Zusammenfassung**

Die Erfindung betrifft ein Bremssystem für Fahrzeuge umfassend eine Bremseinheit. Um ein neues Bremssystem bereitzustellen, welches insbesondere leichter und umweltfreundlicher ist, wird eine Bremseinheit vorgeschlagen, die wenigstens eine Bremsscheibe und eine Bremskolbeneinheit aufweist, einen Druckluftspeicher und eine Steuereinheit, um die Bremskolbeneinheit bedarfsgerecht mit Druckluft aus dem Druckluftspeicher zu beaufschlagen.

## Beschreibung

Bremssysteme sind umfangreich bekannt und im Einsatz. Im Bereich von Pkw's haben sich hydraulische Bremssysteme durchgesetzt. Hierbei wird eine Bremsflüssigkeit unter Druck aus einem Speicher zu den Bremsbacken geführt und bewirkt eine Bewegung der Bremsbacken in Richtung einer Bremsscheibe. Diese Systeme haben eine Reihe von Nachteilen. Ein wesentlicher Nachteil ist die Notwendigkeit der Erzeugung, Lagerung und des Einsatzes eines separaten Mediums, der Bremsflüssigkeit. Diese hat hygroskopische Eigenschaften und muss daher regelmäßig ausgetauscht werden. Speicher, Hauptbremszylinder, Leitungen und Ventile stellen schwere Systeme dar. Insgesamt ist ein hydraulisches Bremssystem schwer.

Im Bereich von Lkw's sind durchaus pneumatische Bremssysteme bekannt, wobei allerdings lediglich ein kraftbetätigter Kolben Druck auf ein geladenes System ausübt. Es ist nicht in dem Sinne ein pneumatisches System, als es nicht damit vergleichbar ist, sondern eher eine pneumatische Verstärkung darstellt.

Hydraulische Bremssysteme sind im Wesentlichen ausgereift. Sie sind wenig veränderbar und insbesondere in Bezug auf neue Fahrzeugentwicklungen wenig anpassbar. Neue Fahrzeugentwicklungen wie beispielsweise Hybridfahrzeuge oder Elektrofahrzeuge benötigen andere Bremszeiten und andere Bremsmomente. Elektromotoren werden praktisch ein- und ausgeschaltet, d.h., auf Räder wirkende Momente sind spontan und müssen entsprechend reaktiv sein. Darüber hinaus besteht ein grundsätzliches Bedürfnis, wo immer möglich in Fahrzeugen Gewicht einzusparen, um den Verbrauch in Bezug auf eine angemessene Leistung zu optimieren. Insbesondere bei Elektrofahrzeugen ist das Mehrgewicht der Batterie zu kompensieren.

Ausgehend vom vorbeschriebenen Stand der Technik liegt der Erfindung die Aufgabe zugrunde, ein neues Bremssystem bereitzustellen, welches insbesondere leichter und umweltfreundlicher ist, darüber hinaus flexibler in Bezug auf Weiterentwicklungen und Anpassungen an moderne Fahrzeugsysteme.

Zur technischen Lösung dieser Aufgabe wird ein Bremssystem mit den Merkmalen des Patentanspruches 1 vorgeschlagen. Weitere Vorteile und Merkmale ergeben sich aus den Unteransprüchen.

Zur technischen Lösung wird ein Bremssystem für Fahrzeuge vorgeschlagen, welche eine Bremseinheit bestehend aus einer Bremsscheibe und einer Bremskolbeneinheit aufweisen, wobei ein Druckluftspeicher, der mit Druckluft befüllt ist, durch eine Steuereinheit so entladen wird, das bedarfsgerecht Druckluft zur Beaufschlagung der Bremskolbeneinheit zugeführt wird.

Die bedarfsgerechte Zuführung ist abhängig von einem Signalgeber, der in herkömmlicher Weise ein Pedal oder auch ein beliebiger Schalter sein kann. Die Bremsdruckbedarfsangabe kann rein digital und elektronisch sein und muss nicht mehr mit Körperkraft ausgeübt werden. Dadurch eignet sich das System insbesondere auch für Behinderte oder ganz andere alternative Betätigungsvorgänge.

Das erfindungsgemäße System zeichnet sich durch besondere Leckagedichtigkeit der einzelnen Aggregate und eine gute Steuerbarkeit aus. Darüber hinaus ist es nicht leckageanfällig und führt insbesondere bei Undichtigkeiten nicht zu Umweltschäden.

Das pneumatische System ist billiger und insbesondere für neue, elektrische Fahrsysteme besser geeignet.

Selbstverständlich umfasst das erfindungsgemäße Bremssystem eine im Bereich beispielsweise einer Bremsscheibe angeordnete Bremskolbeneinheit, die über ein Ventil, welches von einer Steuereinheit angesteuert wird, unter Verwendung entsprechender Leitungen mit Druckluft beaufschlagt werden kann. Die Druckluft kommt von einem oder mehreren Speichern, die ebenfalls mittels Leitungen mit dem entsprechenden Ventil bzw. der Steuereinheit verbunden sind. Eine Betätigungseinheit kann direkt auf die Ventile oder indirekt und auch beispielsweise digital über die Steuereinheit einen Bremsvorgang einleiten. Dies kann in herkömmlicher Weise ein Pedal sein bis hin zu einer Joystickartigen Bremssteuerung. Jegliche Art der Betätigungseinheit ist denkbar.

Ein großer Vorteil des Systems ergibt sich, wenn mit geringen Drücken kleiner 25bar gearbeitet wird. Für entsprechend großflächige Kolben, die gemäß einem vorteilhaften Vorschlag der Erfindung unrund gefertigt sind, also beispielsweise elliptischen Querschnitt haben können, sind diese Drücke ausreichend. Bei entsprechenden unrunden Konturen können große Kolbenflächen eingesetzt werden, um auf diese Weise entsprechend gute Bremsergebnisse zu erzielen, ohne dass dazu mehr Gesamtbauraum erforderlich ist.

Speicher werden mehrfach redundant vorgesehen. Wenigstens ein Speicher wird als Notspeicher erfindungsgemäß vorgesehen., Gemäß einem weiteren vorteilhaften Vorschlag wird für jedes Rad ein Notspeicher vorgesehen. Somit ist eine erhöhte Sicherheit gegeben, was die Einsetzbarkeit des Systems anbetrifft und erweitert.

Die Sicherheit wird weiter erhöht durch die Verwendung von Mehrkreissystemen. Gemäß einem besonders vorteilhaften Vorschlag der Erfindung kann ein Vierkreissystem eingesetzt werden. Es ist auch denkbar, dieses beispielsweise im Sinne einer Kreuzschaltung einzusetzen, um bei Ausfall eines Kreises für ein Rad diesen mit dem Kreis für ein anderes Rad zu koppeln.

Das erfindungsgemäße System bringt eine große Reihe von Vorteilen mit sich. Bei Leckage ist es zunächst einmal unschädlich für die Umwelt. Darüber hinaus kann, da lediglich Druckluft nachgeliefert werden muss, praktisch immer nachgefüllt werden. Zumindest lässt sich ein Minimum an Funktionalität aufrecht erhalten. Es wird Bremsflüssigkeit vollends eingespart, insbesondere auch deren häufiger Wechsel, was angesichts der großen Anzahl von Fahrzeugen eine sehr große Menge ausmacht. Darüber hinaus lässt sich sehr viel Gewicht einsparen, da Bremskraftverstärkter und dergleichen Zusatzaggregate ebenfalls vollständig entfallen. Bei Verwendung großer Bremskolben, die mittels neuer Technologien wie Unrunddrehtechnik herstellbar sind, kann mit Drücken gearbeitet werden, die gering sind. Da Luft grundsätzlich kompressibel ist, was Hydraulik dem Grunde nach nicht ist, kann unter Verwendung großer Kolben auch dieser Faktor berücksichtigt werden. Mit dem erfindungsgemäßen System werden die Bremskolben immer direkt angesprochen, nicht indirekt über irgendwelche Zwischenaggregate. Der Kolben wirkt direkt auf die Bremsbacke und damit als Bremse. Darüber hinaus ist das pneumatische System im Vergleich zu herkömmlichen Systemen äußerst schnell.

Zur Erzeugung des Druckes sind auch Beispiele bekannt, welche auf dem Vorschlag basieren, einen Windgenerator zur Erzeugung elektrischer Energie an einem PKW in einem luftumströmten Bereich unterzubringen.

Es wird ein System vorgeschlagen, bei welchem eine Windturbine, ein Kompressor oder ein Druckluftspeicher zusammenwirken. Die Windturbine wird durch die Relativbewegung des Fahrzeugs durch die Umgebungsluft angetrieben. Ihrerseits treibt sie einen Kompressor an, der seinerseits den Druckluftspeicher füllt.

Unter Kompressor im Sinne der vorliegenden Erfindung ist eine Art von Luftverdichter zu verstehen, so kann die Turbine auch eine einfache Verdichterstufe aufweisen.

In vorteilhafter Weise kann die Windturbine ein Staudruck beaufschlagter Radialläufer sein.

Gemäß einem weiteren vorteilhaften Vorschlag der Erfindung kann die Windturbine alternativ auch mechanisch angetrieben werden. Auf diese Weise ist es möglich, selbst im Stand den Druckluftspeicher zu laden. Hierzu kann beispielsweise ein Elektromotor, ein Verbrennungsmotor oder dergleichen eingesetzt sein.

Als Druckluftspeicher kommt gemäß einem weiteren vorteilhaften Vorschlag der Erfindung eine mehrstufige Speichereinheit in Betracht. So können parallel mehrere Druckluftspeicher geladen werden, um als redundante Druckluftquelle bereitzustehen. Diese Druckluftspeicher können beispielsweise im Frontbereich einer Fahrgastzelle angeordnet sein und auf diese Weise noch einen Sicherheitspuffer bereitstellen.

Durch die Erfindung wird ein neuartiges Bremssystem für Fahrzeuge bereitgestellt, welches druckluftbetätigbar ist und die Nachteile hydraulischer und mechanischer Systeme ausräumt.

Weitere Vorteile und Merkmale der Erfindung ergeben sich aus der folgenden Beschreibung anhand der Figuren. Dabei zeigen:

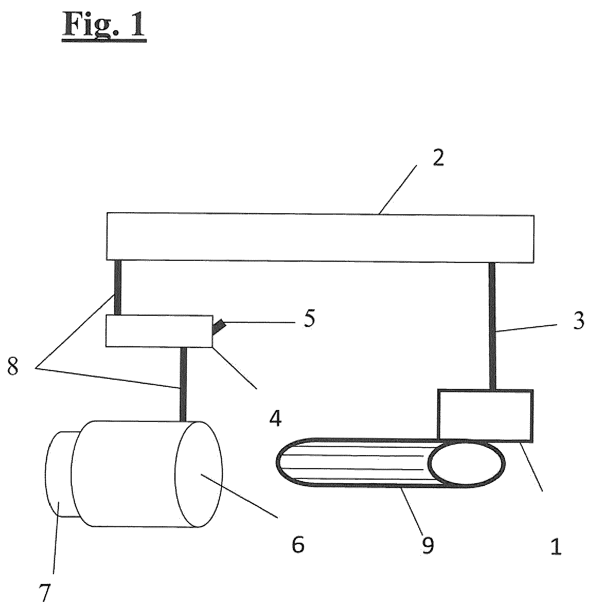

- Fig. 1: eine schematische Darstellung eines Ausführungsbeispiels für ein erfindungsgemäßes Bremssystem.

Rein schematisch ist ein Kompressor oder eine Druckluftquelle 1 gezeigt, die einen Druckluftspeicher 2 füllt. Zu diesem Zweck ist die Druckluftquelle 1 mit dem Speicher mittels entsprechender Leitungen 3 verbunden. Eine Steuereinheit 4, die im gezeigten Ausführungsbeispiel mittels eines direkt verbundenen Betätigungsgliedes 5 betätigbar ist, kann Druckluft über die Leitungen 8 vom Speicher 2 zu einem Zylinder 6 führen, in dem ein Kolben 7 geführt ist. Hierbei kann es sich um den Bremskolben handeln, der direkt eine Bremsbacke betätigt. Diese wirkt dann auf eine nicht gezeigte Scheibe eines Fahrzeuges.

Im gezeigten Ausführungsbeispiel ist auch ein Generator 9 gezeigt, der als Radialläufer stilisiert ist. Der Radialläufer kann beispielsweise im Staudruckbereich eines Fahrzeugs angeordnet werden und die als Kompressor ausgelegte Druckluftquelle 1 betreiben.

Das beschriebene Ausführungsbeispiel dient nur der Erläuterung und ist nicht beschränkend.

### Bezugszeichenliste

- 1: Druckluftquelle
- 2: Druckluftspeicher
- 3: Leitung
- 4: Steuerung
- 5: Betätigungsglied
- 6: Zylinder
- 7: Kolben
- 8: Leitung
- 9: Generator

## Patentansprüche

1. Bremssystem für Fahrzeuge umfassend eine Bremseinheit, die wenigstens eine Bremsscheibe und eine Bremskolbeneinheit aufweist, einen Druckluftspeicher, eine Betätigungseinheit und eine Steuereinheit, um die Bremskolbeneinheit bedarfsgerecht mit Druckluft aus dem Druckluftspeicher zu beaufschlagen.

2. Bremssystem nach Anspruch 1, **dadurch gekennzeichnet, dass** der Druckluftspeicher Luft mit einem Druck kleiner 25bar bereitstellt.

3. Bremssystem nach einem der vorhergehenden Ansprüche, **dadurch gekennzeichnet, dass** dieses mehrere Druckluftspeicher umfasst.

4. Bremssystem nach einem der vorhergehenden Ansprüche, **dadurch gekennzeichnet, dass** dieses einen Not-Druckluftspeicher umfasst.

5. Bremssystem nach Anspruch 4, **dadurch gekennzeichnet, dass** für jedes Rad ein Not-Druckluftspeicher vorgesehen ist.

6. Bremssystem nach einem der vorhergehenden Ansprüche, **dadurch gekennzeichnet, dass** dieses als Mehrkreissystem ausgelegt ist.

7. Bremssystem nach Anspruch 6, **dadurch gekennzeichnet, dass** dieses als Vierkreissystem ausgelegt ist.

8. Bremssystem nach einem der vorhergehenden Ansprüche, **dadurch gekennzeichnet, dass** die Betätigungseinheit handbetätigbar ist.

9. Bremssystem nach einem der vorhergehenden Ansprüche, **dadurch gekennzeichnet, dass** die Bremskolbeneinheit einen Kolben mit unrundem Querschnitt umfasst.

10. Bremssystem nach Anspruch 9, **dadurch gekennzeichnet, dass** die Bremskolbeneinheit einen Kolben mit einer elliptischen Kolbenfläche umfasst.
